(19) Europäisches Patentamt
European Patent Office
Office européen des brevets

(11) **EP 0 714 039 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.[7]: **G02B 5/08**, G02B 1/10

(21) Anmeldenummer: **95810679.1**

(22) Anmeldetag: **30.10.1995**

(54) **Aluminiumoberflächen für lichttechnische Zwecke**

Aluminium surface to be used in the technique of lighting

Surface d'aluminium pour application dans le technique d'éclairage

(84) Benannte Vertragsstaaten:
**AT CH DE ES FR GB IT LI NL**

(30) Priorität: **24.11.1994 CH 354394**

(43) Veröffentlichungstag der Anmeldung:
**29.05.1996 Patentblatt 1996/22**

(73) Patentinhaber: **Alcan Technology & Management AG**
**8212 Neuhausen am Rheinfall (CH)**

(72) Erfinder: **Gillich, Volkmar**
**CH-8212 Neuhausen am Rheinfall (CH)**

(56) Entgegenhaltungen:
**EP-A- 0 495 755**

- **J.T.COX ET AL.: 'ALUMINUM MIRRORS Al2O3-PROTECTED,WITH HIGH REFLECTANCE AT NORMAL BAT GREATLY DECREASED REFLECTANCE AT HIGHER ANGLES OF INCIDENCE IN THE 8-12um REGION' APPLIED OPTICS Bd. 17, Nr. 3, Februar 1978, NEW YORK US, Seiten 333 - 334, XP002952861**
- **E.COJOCARU: 'ANALYTICAL SOLUTION FOR ZERO-PHASE-SHIFT TRANSPARENT COATINGS ON METALLIC REFLECTORS AT 10,6um' APPLIED OPTICS Bd. 32, Nr. 25, 01 September 1993, NEW YORK US, Seiten 4843 - 4845, XP000388201**
- **YOUNG L.: 'Anodic Oxide Films', 1961, ACADEMIC PRESS, NEW YORK * Seite 211 - Seite 223 ***
- **HASS G.: 'Anodically produced multiple oxide films for increasing the reflectance of evaporated aluminium' JOSA Bd. 44, Nr. 10, 01 Oktober 1954, Seiten 810 - 813**
- **HASS G.: 'On the preparation of hard oxide films with precisely controlled thickness on evaporated aluminium mirrors' JOSA Bd. 39, Nr. 7, 01 Juli 1949, Seiten 532 - 540, XP000940830**

## Beschreibung

Vorliegende Erfindung betrifft ein Verfahren zur Herstellung eines Reflektors nach den Oberbegriff von Anspruch 1.

Reflektoren mit geglänzten Oberflächen aus Reinstaluminium oder AlMg-Legierungen zur Erzeugung einer gerichteten oder diffusen Lichtreflexion sind bekannt. Zur Erreichung eines dauerhaften Glanzes werden die geglänzten Oberflächen üblicherweise mit einer organischen oder anorganischen Beschichtung oder einer Oxidschicht geschützt. Dabei können die Oxidschichten durch chemische oder anodische Oxidation hergestellt sein. Organische Beschichtungen können durch Lackieren, Pulverbeschichtung oder durch Auflaminieren oder Kaschieren mit einer Kunststofffolie hergestellt sein. Anorganische Beschichtungen können PVD- (physical vapour deposition), CVD- (chemical vapour deposition), Email- oder Plasmaschichten darstellen.

Für die Herstellung von Reflektoroberflächen weit verbreitet ist das Aufbringen hochreiner, sehr dünner PVD-Al-Schichten auf Glas, welche meist mittels einer Schutzschicht aus beispielsweise PVD-$Al_2O_3$, PVD-$SiO_2$ oder einer Lackschicht geschützt werden. Der geringen Schichtdicke wegen, können PVD-Al-Schichten im allgemeinen nicht anodisiert werden.

Im Journal of the Optical Society of America, Vol. 39, Nr. 7, Juli 1949, Seiten 532-540 beschreibt G. Hass die Herstellung von Aluminiumoxid-Sperrschichten durch Anodisation von auf Glas aufgedampftem Aluminium, wobei diese Sperrschichten eine präzis kontrollierbare Schichtdicke aufweisen.

In Academic Press, New York, 1961, Chapter 17: Aluminium II. Non-porous films, Seiten 211-221 beschreibt L. Young die Zellenstruktur von porösem und nicht-porösem Aluminiumoxid, deren Wassergehalt und vergleicht eine Vielzahl von Oxidschichten anderer Autoren. Die gemachten Vergleiche und Betrachtungen zielen auf die Verwendung von oxidierten Al-Folien für Kondensatoren.

In Journal of the Optical Society of America, Vol. 44, Nr. 10, Oktober 1954, Seiten 810-813 beschreibt G. Hass die Herstellung von reflexionserhöhenden Schichten, wobei die reflexionserhöhende Schicht aus $Al_2O_3/TiO_2$ besteht, und die Herstellung der $Al_2O_3$-Schicht durch Anodisation von auf Glas aufgedampftem Aluminium geschieht.

Das Aufbringen von PVD-$Al_2O_3$-Schichten oder PVD-$SiO_2$-Schichten ist teuer, und die Deposition von Lackschichten ist wegen der für die Erreichung guter Reflexionseigenschaften erforderlichen Homogenität der Schichtdicke aufwendig. Zudem weisen Lackschichten im allgemeinen geringe mechanische Eigenschaften, wie beispielsweise Kratzfestigkeit, und oft eine geringe Stabilität gegenüber uv-Strahlung auf.

Eine andere bis heute häufig benutzte Schutzschicht für Reflektoroberflächen wird durch die anodische Oxidation mit Gleichstrom in einem Schwefelsäureelektrolyten hergestellt. Die resultierende Schutzschicht weist zwar eine regelmässige Schichtdicke auf, zeigt aber üblicherweise eine durch das Verfahren bedingte hohe Porosität. Die anodische Oxidation in Schwefelsäureelektrolyten wird gewöhnlich als GS-Verfahren bezeichnet (Gleichstrom-Schwefelsäureverfahren). Dabei werden -- zur Erreichung genügender Reflexionseigenschaften -- die als Reflektoroberflächen vorgesehenen Aluminiumoberflächen üblicherweise chemisch oder elektrolytisch geglänzt und anschliessend mittels beispielsweise dem GS-Verfahren mit einer transparenten Schutzschicht geschützt. Typischerweise liegen beim GS-Verfahren die Schwefelsäurekonzentration bei 20 Gew.-%, die Elektrolyttemperaturen bei 15 bis 30 °C, die angelegte Gleichspannung bei 12 bis 30 V, wobei die Stromdichte bis 1 bis 3 A/dm$^2$ beträgt. Die dabei erziehlten Schichtdicken messen typischerweise 1 bis 10 µm. Die erhaltenen Schichten sind farblos bis gelblich.

Die durch das GS-Verfahren hergestellte Oxidschicht besteht generell aus zwei Schichten: einer porenfreien, sehr dünnen Grund- oder Sperrschicht und einer porösen Deckschicht. Die Poren entstehen durch die teilweise chemische Rücklösung der Oxidschicht an der dem Elektrolyten ausgesetzten Oberfläche. Die Gesamtdicke der Oxidhaut erreicht ihre Obergrenze, wenn sich Wachstum und Rücklösung die Waage halten, was von der Elektrolytzusammensetzung, der Stromdichte und der Elektrolyttemperatur abhängt.

Um einen genügenden Korrosionsschutz zu erhalten, müssen die beim GS-Verfahren entstehenden porösen Schichten verdichtet werden. Dies geschieht üblicherweise mit siedendem Wasser (>96 °C) oder Wasserdampf (>98 °C). Bei diesem hydrothermalen Nachverdichten (Sealing) quillt das Aluminiumoxid durch Wasseraufnahme, so dass sich die Poren schliessen. Dabei wird ein Teil des Aluminiumoxids in Aluminium-Monohydrat umgewandelt.

Beim Nachverdichten in kochendem Wasser oder Wasserdampf entstehen jedoch oft unerwünschte, gut haftende Sealingbeläge (sogenannter Schmant), die durch atmosphärische Einflüsse störende, matte bis schillernde, zu Interferenzfarben führende Beläge bilden. Deshalb müssen die Sealingbeläge mittels abrasiven Mitteln entfernt werden. Eine Möglichkeit zur Verhinderung solcher Sealingbeläge besteht in der Verwendung spezieller Nachverdichtungsbäder.

Die in Schwefelsäure erzeugten anodischen Oxidschichten sind nur auf Reinstaluminium und AlMg oder AlMgSi-Legierungen auf Basis von Reinstaluminium (Al ≥ 99.85 Gew.-%) farblos und glasklar. Auf den meisten Konstruktionslegierungen entstehen als Folge der im Gefüge vorhandenen heterogenen Ausscheidungen mehr oder weniger getrübte Schichten. Zudem findet bei den meisten Legierungen bei ungünstiger Wärmebehandlung eine Entmischung im Gefüge statt, was zu grauen Verfärbungen, wie beispielsweise Wärmestauflekken, führt.

Bei den mittels dem GS-Verfahren hergestellten porösen Oberflächenschutzschichten auf Aluminiumoberflächen, welche für Reflektoren typischerweise eine Schichtdicke von 1 bis 10 µm aufweisen, können insbesondere bei weniger reinen Werkstoffen, wie beispielsweise Al 99.85, Al 99.8 oder Al 99.5, Legierungsbestandteile, wie beispielsweise Fe- oder Sireiche intermetallische Phasen, in die Oxidschicht miteingebaut werden, welche dann zu ungewollter Lichtabsorption und/oder zu Lichtstreuung führen, d.h. das Licht wird in zahlreiche Raumwinkel reflektiert. Folglich werden die nach dem elektrolytischen Glänzen vorhandenen lichttechnischen Werte, wie beispielsweise die Gesamtreflexion oder die gerichtete Reflexion, durch die GS-Anodisation nachteilig beeinflusst.

Durch die verfahrensbedingte hohe Schichtdicke von mit dem GS-Verfahren hergestellten anodischen Oxidschichten sinkt der Reflexionsgrad der Oberfläche durch Absorption und Lichtstreuung. Schliesslich weist die anodische Oxidschicht im üblichen Schichtdickenbereich von 1 bis 3 µm oft störende Interferenzeffekte, die sogenannte Irisierung, auf.

Ein Verfahren der eingangs genannten Art ist in der EP-A-0 495 755 auf seite 2, Zeilen 4 - 17 offenbart.

Aufgabe vorliegender Erfindung ist es, genannte Nachteile zu vermeiden und ein Verfahren zum Herstellung von Reflektoren für lichttechnische Zwecke vorzuschlagen, die wenigstens eine Oberfläche oder Teile wenigstens einer Oberfläche enthalten, die eine möglichst verlustfreie Reflexion des einfallenden Lichtes ermöglichen.

Erfindungsgemäss wird dies durch ein Verfahren mit der Merkmalen von Anspruch 1 erreicht.

Der Brechungs index n ist wegen der Dispersion von der Wellenlänge abhängig, d.h. in vorliegenden Text bezieht. sich *n* immer auf die entsprechende Wellenlänge des auf die Reflektoroberfläche eingestrahlten Lichtes.

Die für das erfindungsgemässe Verfahren benötigten Aluminiumoberflächen können Oberflächen von Stückgut, Bändern, Blechen oder Folien aus Aluminium, sowie AluminiumDeckschichten von Körpern aus Verbundwerkstoffen, insbesondere Aluminiumdeckschichten von Verbundplatten, oder auf beliebige Werkstoffe -- beispielsweise elektrolytisch -- abgeschiedene Aluminiumschichten betreffen. In einer bevorzugten Ausführungsform betrifft der die Aluminiumoberfläche enthaltende Gegenstand ein Werkstück aus Aluminium, welches z.B. durch ein Walz-, Extrusions-, Schmiede- oder Fliesspressverfahren hergestellt wurde.

Mit dem Werkstoff Aluminium sind in vorliegendem Text Aluminium aller Reinheitsgrade sowie alle Aluminiumlegierungen umfasst. Insbesondere umfasst der Begriff Aluminium alle Walz-, Knet-, Guss-, Schmiede- und Presslegierungen aus Aluminium. Die Aluminiumoberflächen können aus hochreinen Alumimumkgierungen einer Reinheit von 99.99 Gew.-% Al und höher, beispielsweise aus plattiertem Material, bestehen oder eine Reinheit von 99.5 bis 99.99 Gew.-% Al aufweisen. Bevorzugt weisen die Aluminiumoberflächen der erfmdungsgemässen Reflektoren eine Reinheit kleiner als 99.99 Gew.-% Al auf, insbesondere eine Reinheit von 99.5 bis 99.98 Gew.-% Al. Besonders bevorzugt weisen die Aluminiumoberflächen jedoch eine Reinheit von 99.8 bis 99.98 Gew.-% Al auf.

Die Sperrschichten zeigen auf Aluminiumoberflächen einer Reinheit von 99.5 bis 99.98 Gew.-% keine wesentlichen lichttechnischen Veränderungen der Oberflächeneigenschaften der ursprünglichen Aluminiumoberflächen, d.h. der Oberflächenzustand der Aluminiumoberflächen, wie er beispielsweise nach dem Glänzen vorhanden ist, bleibt nach dem Aufbringen der Sperrschicht weitgehend erhalten. Dabei ist jedoch zu berücksichtigen, dass die Metallreinheit der Oberflächenschicht, beispielsweise auf das Glänzergebnis einer Aluminiumoberfläche, sehr wohl einen Einfluss ausüben kann, denn -bezüglich dem Glänzen von Aluminiumoberflächen -- gilt bekannterweise: je unreiner das Aluminium, desto schlechter wird das Glänzergebnis und somit dessen Reflexionseigenschaften.

Die Aluminiumoberflächen können beliebige Gestalt aufweisen und können gegebenenfalls auch strukturiert sein. Bei gewalzten Aluminiumoberflächen können diese beispielsweise mittels Hochglanz- oder Designerwalzen behandelt sein. Eine bevorzugte Verwendung strukturierter Aluminiumoberflächen findet sich beispielsweise für Reflektoren in der Tageslichtbeleuchtung, wobei insbesondere strukturierte Oberflächen mit Strukturgrössen von 0.1 bis 1 mm zur Anwendung gelangen.

Die Sperrschicht weist über die ganze Aluminiumoberfläche eine konstante Schichtdicke auf, die um nicht mehr als ± 5 % variiert. Dies erlaubt erst den Einsatz der Reflektoren für die möglichst verlustfreie Reflexion elektromagnetischer Wellen in der Lichttechnik, da erst die reproduzierbare, homogene Schichtdicke der Sperrschicht die Verwendung der Reflektoren beispielsweise für die Reflexion mit konstruktiver Interferenz oder zur Erzielung genau definierter Farbtöne erlaubt.

Damit erstens eine konstruktive Interferenz auftreten kann und zweitens die Lichtabsorbtion in der Sperrschicht möglichst gering ausfällt, ist die Forderung einer für die zu reflektierenden elektromagnetischen Wellen transparenten Sperrschicht erfindungswesentlich. Ein weiteres wesentliches Merkmal des erfindungsgemässen Verfahrens betrifft die Porenfreiheit der Sperrschicht. Damit die Absorption des die Sperrschicht durchdringenden Lichtes sowie eine durch das Vorhandensein von Poren möglicherweise auftretende und schlecht kontrollierbare diffuse Streuung möglichst gering ausfallen, muss die Sperrschicht porenfrei sein. Dabei wird unter dem Begriff porenfrei nicht eine absolute Porenfreiheit verstanden. Vielmehr ist die Sperrschicht im wesentlichen porenfrei. Wichtig dabei ist, dass die anodisch erzeugte Aluminiumoxidschicht im wesentlichen keine verfahrensbedingte Porosität aufweist. Unter einer verfahrensbedingten Porosität wird beispielsweise die Verwendung eines Aluminiumoxid-auflösenden Elektrolyten verstanden. In vorliegender Erfindung weist die porenfreie Sperrschicht insbesondere eine Porosität von weniger als 1 % auf.

Die Dielektrizitätskonstanten e der Sperrschicht hängt u.a. von den zur Herstellung der Sperrschicht verwendeten Verfahrensparametern während der anodischen Oxidation ab. Erfindungsgemäss liegt die Dielektrizitätskonstanten e der Sperrschicht bei einer Temperatur von 20 °C zwischen 6 und 10.5 und bevorzugt zwischen 8 bis 10.

Die Schichtdicke der Sperrschicht wird bevorzugt derart gewählt, dass die Reflektoroberfläche eine konstruktive Interferenz des reflektierten Lichtes ermöglicht. Die Bedingung für konstruktive Interferenz lässt sich mit $d \cdot n = k \cdot \lambda/2$ beschreiben, wobei $d \cdot n$ die optische Schichtdicke, $n$ der Brechungsindex, $\lambda$ die mittlere Wellenlänge des auf die Reflektoroberfläche eingestrahlten Lichtes und $k$ eine natürliche Zahl bezeichnet. Dabei ist zu berücksichtigen, dass die mit $d \cdot n = k \cdot \lambda/2$ umschriebene Bedingung für konstruktive Interferenz exakt nur für senkrecht auf die Retlektoroberfläche einfallendes Licht gilt.

Bezüglich der Sperrschicht-Schichtdicke wurde gefunden, dass die Reflexionseigenschaften im wesentlichen periodisch verlaufen, wobei mit zunehmender Schichtdicke, insbesondere bei Schichten mit optischen Schichtdicken $d \cdot n$ grösser als $3 \cdot \lambda/2$, die Reflexionseigenschaften für lichttechnische Zwecke ungenügend sind. Bevorzugt werden daher Schichtdicken, die eine konstruktive Interferenz des reflektierten Lichtes ermöglichen und $k$ eine natürliche Zahl ist, wobei $k$ bevorzugt 1, 2 oder 3 und besonders bevorzugt 1 oder 2 beträgt. Der Reflexionseigenschaften wegen, liegt die Schichtdicke der Sperrschicht bevorzugt im Schichtdickenbereich zwischen 60 und 490 nm (Nanometer) und besonders bevorzugt zwischen 75 und 320 nm.

Reflektoren, enthaltend Aluminiumoberflächen mit Sperrschichten, bei denen die Sperrschicht-Schichtdicke die Bedingung für konstruktive Interferenz erfüllt und im Schichtdickenbereich von $d \cdot n = k \cdot \lambda/2 \pm 20$ nm liegt, zeigen im wesentlichen dieselben guten Reflexionseigenschaften.

Der Brechungsindex $n$ der Sperrschicht liegt zweckmässigerweise zwischen 1.55 und 1.65. Die Wellenlänge $\lambda$ entspricht ganz bevorzugt der mittleren, für das menschliche Auge bei Tageslicht am besten wahrnehmbaren Wellenlänge des sichtbaren Lichtes, welche bei ca. 550 nm liegt.

In einer bevorzugten Ausführungsform ist die Sperrschicht derart beschaffen, dass sie eine Schichtdicke $d$ aufweist, die der Massgabe für konstruktive Interferenz $d \cdot n = k \cdot \lambda/2 \pm 20$ nm entspricht und weniger als 3 % der eingestrahlten Lichtenergie absorbiert.

Es wurde gefunden, dass auf geglänzten Aluminiumoberflächen gebildete Sperrschichten mit einer konstanten, über die ganze Reflektoroberfläche homogenen Schichtdicke eine gleichmässige Farbtönung erhalten, wenn die Schichtdicke d nach Massgabe

$$[k \cdot \lambda/2 + 20 \text{ nm}] < d \cdot n < [(k+1) \cdot \lambda/2 - 20 \text{ nm}]$$

gewählt wird. Diese Farbtönungen sind im Gegensatz zu den meisten Farbstoff enthaltenden Schichten lichtecht. Zudem ist durch Verwendung eines Polarisationsfilters eine Verstärkung oder Auslöschung der Farberscheinungen möglich.

In einer weiteren Ausführungsform weist die Sperrschicht eine Schichtdicke $d$ nach Massgabe $d \cdot n = l \cdot \lambda/4 \pm 20$ nm auf, wobei $l$ eine ungerade natürliche Zahl bezeichnet. Derartige Reflektoren eignen sich als Ausgangsmaterial zur Herstellung von Reflektoren mit reflexionserhöhenden LI/HI-Multilayerschichten, d.h. LI/HI-Mehrfachschichten. Dabei bedeuten LI/HI-Multilayer, d.h. low/high-Index-Multilayer, Mehrfachschichten, die aus mindestens zwei Schichten mit verschiedenem Brechungsindex aufgebaut sind. Die Kombination zweier auf einer Metalloberfläche befindlichen dielektrischer Schichten mit verschiedenem Brechungsindex, bei der die Schicht mit dem tieferen Brechungsindex auf die Metalloberfläche zu liegen kommt, erlaubt gegenüber einer einzelnen homogenen Schicht eine Verbesserung der Reflexionseigenschaften. Bei gegebener Schichtzusammensetzung kann die höchste Reflexion dann erreicht werden, wenn die Schichtdicken der einzelnen Schichten $\lambda/4$ oder ein ungerades Vielfaches davon betragen. Bezüglich der Zusammensetzung der Schichtmaterialien werden die besten Reflexionseigenschaften dann erreicht, wenn der Unterschied der Brechungsindizes der einzelnen Schichten möglichst gross wird.

Durch die im Vergleich zu einer GS-anodisierten Oxidschicht geringen Schichtdicke der Sperrschicht, weist letztere nur wenige für die Lichtstreuung in der Schutzschicht verantwortliche Fremdpartikel, sprich Streuzentien, auf. Zudem ist bei den erfindungsgemäss hergestellten Reflektoren die linear von der Schichtdicke abhängige Absorption des einfallenden Lichtes gering, wodurch im Vergleich zu bekannten Reflektoren mit beispielsweise dem GS-Verfahren hergestellten Oxidschichten, insbesondere wenn die Schichtdicke der Sperrschichten derart gewählt ist, dass konstruktive Interferenz auftritt, eine Reflexionserhöhung resultiert. Im Vergleich zu den Reflektoren mit GS-anodisierten Oxidschichten wirken sich bei Sperrschichten der erfindungsgemäss hergestellten Reflektoren die in die Sperrschicht eingebauten Fremdpartikel, wie beispielsweise Partikel aus Fe, Si, AlFeSi, bezüglich der die Gesamtreflexion beeinflussenden Absorption sowie der den Glanz beeinflussenden Lichtstreuung des eingestrahlten Lichtes nicht stark aus. Ausserdem ist wegen der geringen Schichtdicke der Sperrschicht die Lichtstreuung an Biegekanten, insbesondere diejenige, die aus Schichtrissen in der Oxidschicht resultiert, üblicherweise vernachlässigbar gering.

Währenddem bei GS-Schichten üblicherweise wegen der bei grossen Schichtdicken auftretenden Schichtdickenvariation selektive Lichtabsorption eintritt und dadurch Irisierungsprobleme schafft, entsteht durch die geringe und über die Reflektoroberfläche sehr konstante Schichtdicke der Sperrschicht keine Irisierung (Regenbogenfarben). Zudem sind -- durch die Schichtdicke der Sperrschicht bedingt -- die Abstände der zu Irisierungserscheinungen führenden Reflexionsebenen zu gering. Bei GS-Schichten andererseits liegen die Abstände der Reflexionsebenen im Wellenbereich des einfallenden Lichtes, wodurch Irisierung auftreten kann.

Reflektoren mit GS-anodisierten Oxidschichten zeigen, der starken Absorption der Oxidschicht im Infrarotbereich wegen, teilweise bescheidene Reflexionseigenschaften, wodurch diese nicht als IR-Reflektoren einsetzbar sind. Demgegenüber zeigen die erfindungsgemässen Reflektoren für IR-Wellen mit einer Wellenlänge bis zu ungefähr 10 μm keine wesentliche Absorption.

Die mit dem erfindungsgemässen Verfahrens hergestellten Reflektoren zeigen auch bezüglich einer allfälligen Weiterverarbeitung gegenüber den aus dem Stand der Technik bekannten Reflektoren den wesentlichen Vorteil, dass beispielsweise beim Abkanten keine sichtbaren Risse, die sogenannten Glitzerkanten, entstehen.

Nachfolgende Tabelle 1 zeigt den Vergleich typischer Reflexionseigenschaften, insbesondere der jeweiligen Anteile gerichteter und gestreuter Reflexion, einer Aluminiumglanzoberfläche ohne Sperrschicht und Aluminiumglanzoberflächen verschiedener Reinheit, welche mit einer 150 nm dicken Sperrschicht versehen sind. Die Alumi-niumglanzoberfläche ohne Sperrschicht weist eine Reinheit von 99.90 Gew.-% Al auf. Die Aluminiumglanzoberflächen der mit einer Sperrschicht versehenen Reflektoren weisen eine Reinheit von 99.50, 99.90 bzw. 99.98 Gew.-% Al auf. Die in der Tabelle 1 angeführten Reflexionswerte sind nach DIN 5036 gemessen und stellen jeweils eine lichttechnische Grösse dar, d.h. die gemessenen Reflexionswerte sind mit der Lichtempfindlichkeit des Auges gewichtet. Wie aus den angegebenen Werten erkennbar, wird die Reflexion durch die Sperrschicht nur minimal vermindert.

Tabelle 1 :

|  | Gesamtreflexion | gerichtete Reflexion | gestreute Reflexion |
|---|---|---|---|
| Al 99.9, geglänzt | 92.6 % | 88.3 % | 4.3 % |
| Al 99.5 %, geglänzt mit Sperrschicht | 88.3 % | 76.3 % | 12.0 % |
| Al 99.9, geglänzt mit Sperrschicht | 92.0 % | 87.4 % | 4.6 % |
| Al 99.98, geglänzt mit Sperrschicht | 92.0 % | 90.5 % | 1.5 % |

Das erfindungsgemässe Verfahren erlaubt die Herstellung dünner, homogener und bezüglich elektromagnetischer Strahlung wenigstens im sichtbaren Bereich transparenter Sperrschichten mit einer gleichmässigen Schichtdicke. Wenn sich Licht in einem Medium, beispielsweise Luft, ausbreitet und in ein anderes Medium, beispielsweise Aluminiumoxid, eintritt, in dem die Ausbreitungsgeschwindigkeit des Lichtes anders ist (anderer Brechungsindex), wird ein Teil des auf die Oberfläche auftreffenden Lichtes zurückgeworfen. Um einen Reflektor mit über die ganze Oberfläche gleichmässigen Reflexionseigenschaften zu erhalten, sind somit homogene Schichten mit gleichmässiger Schichtdicke notwendig.

Beim erfindungsgemässen Elektrolyseverfahren wird wenigstens die zu oxidierende Aluminiumoberfläche mit einem vorbestimmten, definierten Oberflächenzustand versehen und anschliessend in eine elektrisch leitende Flüssigkeit, den Elektrolyten, gegeben und als Anode an einer Gleichspannungsquelle angeschlossen, wobei als negative Elektrode üblicherweise rostfreier Stahl, Graphit, Blei oder Aluminium verwendet wird. Erfindungsgemäss ist der Elektrolyt derart beschaffen, dass er das während dem Elektrolyseprozess gebildete Aluminiumoxid chemisch nicht auflöst , d.h. es findet keine Rücklösung des Aluminiumoxids statt. Im Gleichspannungsfeld entwickelt sich an der Kathode Wasserstoffgas und an der Anode Sauerstoffgas. Der an der Aluminiumoberfläche entstehende Sauerstoff bildet durch Reaktion mit dem Aluminium eine während dem Prozess zunehmend dickere Oxidschicht. Da der Schichtwiderstand mit zunehmender Dicke der Sperrschicht schnell ansteigt, nimmt der Stromfluss entsprechend schnell ab und das Schichtwachstum hört auf.

Die erfindungsgemässe Herstellung von Reflektoren bedingt eine saubere Aluminiumoberfläche, d.h. die elektrolytisch zu oxidierende Aluminiumoberfläche muss üblicherweise vorgängig zum erfindungsgemässen Verfahren einer Oberflächenbehandlung, der sogenannten Vorbehandlung, zugeführt werden.

Die Aluminiumoberflächen weisen üblicherweise eine natürlich entstehende Oxidschicht auf, die häufig aufgrund ihrer Vorgeschichte durch Fremdsubstanzen verunreinigt ist. Solche Fremdsubstanzen können beispielsweise Reste von Walzhilfsmitteln, Transportschutzölen, Korrosionsprodukte oder eingepresste Fremdpartikel und ähnlichem sein. Zum Zwecke der Entfernung solcher Fremsubstanzen werden die Aluminiumoberflächen üblicherweise mit Reinigungsmitteln, die einen gewissen Beizangriff ausüben, chemisch vorbehandelt. Dazu eignen sich -- neben sauren wässrigen Entfettungsmitteln -- insbesondere alkalische Entfettungsmittel auf Basis Polyphosphat und Borat. Eine Reinigung mit mässigem bis starkem Materialabtrag bildet das Beizen oder Aetzen mittels stark alkalischen oder sauren Beizlösungen, wie z.B. Natronlauge oder ein Gemisch aus Salpetersäure und Flusssäure. Dabei werden die natürliche Oxidschicht und damit auch alle darin eingebauten Verunreinigungen entfernt. Bei Verwendung von stark angreifenden alkalischen Beizen entstehen oft Beizbeläge, die durch eine saure Nachbehandlung entfernt werden müssen. Eine Reinigung ohne Oberflächenabtrag bildet das Entfetten der Oberflächen durch Anwendung organischer Lösungsmittel oder wässriger oder alkalischer Reiniger.

Je nach Oberflächenzustand ist auch ein mechanischer Oberflächenabtrag durch abrasive Mittel notwendig. Eine solche Oberflächenvorbehandlung kann beispielsweise durch Schleifen, Strahlen, Bürsten oder Polieren geschehen und gegebenenfalls durch eine chemische Nachbehandlung ergänzt werden.

Aluminiumoberflächen zeigen im metallisch blanken Zustand ein sehr hohes Reflexionsvermögen für Licht- und Wärmestrahlen. Je glatter die Oberfläche, desto höher ist die gerichtete Reflexion und desto glänzender wirkt die Oberfläche. Höchsten Glanz erzielt man auf Reinstaluminium und auf Speziallegierungen, wie beispielsweise AlMg oder AlMgSi.

Eine hoch reflektierende Oberfläche wird beispielsweise durch Polieren, Fräsen, durch Walzen mit hochglanzpolierten Walzen im letzten Walzgang oder durch chemisches oder elektrolytisches Glänzen erreicht. Das Polieren kann beispielsweise mit Schwabbelscheiben aus weichem Tuch und gegebenfalls unter Verwendung einer Polierpaste geschehen. Beim Polieren durch Walzen kann im letzten Walzgang beispielsweise mittels gravierter oder geätzter Stahlwalzen oder durch eine vorgegeben Struktur aufweisende und zwischen den Walzen und dem Walzgut angeordnete Mittel zusätzlich eine vorgegebene Oberflächenstruktur in die Aluminiumoberfläche eingeprägt werden. Das chemische Glänzen geschieht beispielsweise durch Anwendung eines hochkonzentrierten Säuregemisches bei üblicherweise hohen Temperaturen von ca. 100 °C. Für das elektrolytische Glänzen können saure oder alkalische Elektrolyten eingesetzt werden, wobei üblicherweise saure Elektrolyten bevorzugt werden.

Um den Glanz zu bewahren, müssen die geglänzten Oberflächen vor chemischen und physikalischen Einflüssen geschützt bzw. konserviert werden. Die dazu aus dem Stand der Technik bekannten Verfahren wie die GS-Anodisation oder die Lackbeschichtung weisen die bereits oben beschriebenen verfahrensbedingten Nachteile wie hohe und schwer kontrollierbare Schichtdicken oder eine inhomogene Schichtbildung auf.

Das erfindungsgemässe Verfahren ergibt homogene Sperrschicht-Schutzschichten mit gleichmässigen Schichtdicken, welche im sichtbaren Bereich im wesentlichen transparent sind, so dass die Reflexion des Lichtes an der Grenzfläche Sperrschicht/Aluminium erfolgen kann.

Die elektrolytische Herstellung von Sperrschichten gemäss vorliegender Erfindung erlaubt die präzise Kontrolle der resultierenden Sperrschicht-Schichtdicke. Die mit dem erfindungsgemässen Verfahren maximal erzielte Schichtdicke in Nanometer (nm) entspricht in erster Näherung der angelegten und in Volt (V) gemessenen Spannung, d.h. die maximal erzielte Schichtdicke steht in linearer Abhängigkeit zur Anodisierspannung. Der exakte Wert der maximal erreichten Schichtdicke in Abhängigkeit der angelegten Gleichspannung $U$ kann durch einen einfache Vorversuch bestimmt werden und liegt von 1.2 bis 1.4 nm/V, wobei der genaue Werte der Schichtdicke in Funktion der angelegten Spannung abhängig ist vom verwendeten Elektrolyten, d.h. dessen Zusammensetzung sowie dessen Temperatur.

Durch die Verwendung eines nicht rücklösenden Elektrolyten sind die Sperrschichten nahezu porenfrei, d.h. allfällig auftretende Poren resultieren beispielsweise aus Verschmutzungen im Elektrolyten oder aus Gefüge-Fehlstellen in der Aluminium-Oberflächenschicht, jedoch nur unwesentlich durch Auflösung des Aluminiumoxids im Elektrolyten. Da der elektrische Widerstand der Oxidschicht während der Bildung der Oxidschicht stark anwächst, benötigt man gegenüber dem GS-Verfahren deutlich höhere Spannungen.

Als nicht rücklösende Elektrolyten können im erfindungsgemässen Verfahren beispielsweise organische oder anorganische Säuren, in der Regel verdünnt mit Wasser, mit einem pH-Wert von 2 und grösser, bevorzugt 3 und grösser, insbesondere 4 und grösser und 7 und kleiner, bevorzugt 6 und kleiner, insbesondere 5.5 und kleiner, verwendet werden. Bevorzugt werden kalt, d.h. bei Raumtemperatur, verarbeitbare Elektrolyten. Besonders bevorzugt werden anorganische oder organische Säuren, wie Borsäure, Adipinsäure, Zitronensäure oder Weinsäure, oder Gemische davon, oder Lösungen von Ammonium- oder Natriumsalzen von organischen oder anorganischen Säuren, insbesondere der namentlich genannten Säuren und deren Gemische. Dabei weisen die Lösungen bevorzugt eine Konzentration von total 20 g/l oder weniger, zweckmässig 2 bis 15 g/l, von im Elektrolyten gelöstem Ammonium- oder Natriumsalz auf. Ganz besonders bevorzugt werden dabei Lösungen von Ammoniumsalzen der Zitronen- oder Weinsäure oder Natriumsalzen der Phosphorsäure.

Ein ganz besonders bevorzugter Elektrolyt enthält 1 bis 5 Gew.-% Weinsäure, welcher beispielsweise eine zur Einstellung des gewünschten pH-Wertes entsprechende Menge Ammoniumhydroxid ($NH_4OH$) beigegeben werden kann.

Die Elektrolyte sind in der Regel wässrige Lösungen.

Die maximal mögliche Anodisierspannung wird durch die Spannungsfestigkeit des Elektrolyten bestimmt. Diese ist beispielsweise von der Elektrolytzusammensetzung und von der Elektrolyttemperatur abhängig und liegt üblicherweise im Bereich zwischen 300 und 600 Volt.

Um beispielsweise die Spannungsfestigkeit des Elektrolyten zu erhöhen, kann dem Elektrolyten Alkohol als weiteres Lösungsmittel zugegeben werden. Dazu eignen sich insbesondere Methanol, Äthanol, Propanol wie beispielsweise Propylalkohol oder Isopropanol, oder ButanoL Die Menge des dem Elektrolyten zugegebenen Alkohols ist unkritisch, so dass das Mengenverhältnis Elektrolyt zu Lösungsmittel beispielsweise von bis zu 1:50 betragen kann. Durch die Zugabe von Alkohol kann die Spannungsfestigkeit des Elektrolyten bis beispielsweise 1200 V erhöht werden. Für das erfindungsgemässe Verfahren werden jedoch alkoholfreie Elektrolyten bevorzugt.

Die für das erfindungsgemässe Verfahren optimale Elektrolyttemperatur hängt vom verwendeten Elektrolyten ab; ist aber im allgemeinen für die Qualität der erhaltenen Sperrschicht von untergeordneter Bedeutung. Für das erfindungsgemässe Verfahren werden Temperaturen von 15 bis 40 °C und insbesondere solche zwischen 18 und 30 °C bevorzugt.

Das erfindungsgemässe Verfahren eignet sich besonders für die kontinuierliche oder stückweise Herstellung einer Sperrschicht auf Bänder, Bleche, Folien oder Stückgut aus Aluminium, sowie auf Verbundwerkstoffen mit mindestens einer Deckschicht aus Aluminium. Dabei zeigt sich bei Verwendung von Aluminium einer Reinheit, die gleich oder grösser ist als 99.5 Gew.-% kein wesentlicher Einfluss auf die Sperrschichtqualität, d.h. der Oberflächenzustand, welcher nach dem Glänzprozess der Aluminiumoberfläche vorhanden ist, bleibt nach dem Aufbau der Sperrschicht im wesentlichen erhalten.

Besonders geeignet ist das erfindungsgemässe Verfahren für die elektrolytische Oxidation der Aluminiumoberfläche in einem kontinuierlichen Prozess mittels beispielsweise einer Durchlaufanlage, beispielsweise mit einem anodischen Bandanodisierverfahren.

Im Vergleich mit der aus dem Stand der Technik bekannten GS-Anodisation, zeigt das erfindungsgemässe Verfahren folgende wesentliche Vorteile:

- vernachlässigbarer Elektrolytverbrauch, da das Aluminiumoxid nicht rückgelöst wird und die Konzentration an Salzen üblicherweise sehr gering ist (bis ca. 20 g/l)

- kein Sealing erforderlich

- geringer Stromverbrauch.

Beim GS-Verfahren ergibt sich durch die Rücklösung des Aluminiumoxids eine Anreicherung von Aluminium im Elektrolyten, wodurch der Elektrolytverbrauch entsprechend erhöht wird. Zudem erfordert die Elektrolytherstellung für die GS-Anodisation eine hohe Konzentration an Säuren, d.h. bis zu 200 g/l. Demgegenüber ist die Konzentration an im Elektrolyten gelösten Salzen für das erfindungsgemässe Verfahren recht gering, d.h. bis ca. 20 g/l. Demgemäss zeigt das erfindungsgemässe Verfahren auch nur wenig Verschleppung von Elektrolytbestandteilen in die Oxidschicht.

Beim GS-Verfahren erfordert die Herstellung einer 2 µm dicken anodischen Oxidschicht einen Stromverbrauch von ca. 35'000 As/m$^2$; demgegenüber beträgt der Stromverbrauch für die Herstellung einer typischen Sperrschicht von 150 nm mit dem erfindungsgemässen Verfahren nur ca. 2500 As/m$^2$; hierbei bedented die Einheit "As" die SI-Einheit für die elektrische Ladung (1 As = 1 coulomb).

Während zur Herstellung von anodischen Oxidschichten mit dem GS-Verfahren sehr reine Aluminiumwerkstoffe eingesetzt werden müssen, um die Absorption oder diffuse Streuung des Lichtes -- verursacht durch die in der dicken Oxidschicht eingelagerten, unlöslichen Fremdpartikel -- oder die durch Interferenzeffekte hervorgerufene unerwünschte Irisierung zu verhindern, sind die mit dem erfindungsgemässen Verfahren hergestellten Oxidschichten bei entsprechender Wahl der Sperrschicht-Schichtdicke auch bei Verwendung eines weniger reinen Aluminiumwerkstoffes irisierungsfrei.

Die erfindungsgemäss hergestellten Reflektoren finden besonders bevorzugt Verwendung für Leuchten in der Lichttechnik und insbesondere in der Tageslichttechnik, insbesondere als funktionelle Leuchten wie Bildschirmarbeitsplatz-Leuchten, Sekundärleuchten, Rasterleuchten oder Lichtleitelemente wie Lichtumlenklamellen.

Eine bevorzugte Verwendung der erfindungsgemäss hergestellten Reflektoren liegt weiter in ihrer Verwendung für dekorative Leuchten, insbesondere mit Farbtönungen, oder Decoroberflächen von beispielsweise Decken- oder Wandelementen

Die erfindungsgemäss hergestellten Reflektoren werden weiter bevorzugt zur Erzeugung von vom Beleuchtungs- und/oder Betrachtungswinkel abhängigen Farbtönungen verwendet.

Eine weitere bevorzugte Verwendung der erfindungsgemäss hergestellten Reflektoren liegt in deren Verwendung als Ausgangsmaterial für die Herstellung von reflexionserhöhenden LI/HI-Multilayer. Dazu sind Al$_2$O$_3$-Sperrschicht-Sthichtdicken von $k·\lambda/4 \pm 20$ nm notwendig, wobei $\lambda$ die mittlere Wellenlänge des auf die Reflektoroberfläche eingestrahlten Lichtes und $k$ eine ungerade natürliche Zahl bezeichnet.

Als auf die Sperrschicht mit einem Brechungsindex von ca. 1.6 aufzubringende HI-Schicht (high-Index-Schicht) eignen sich beispielsweise Schichten aus Titanoxid ($TiO_2$) mit einem Brechungsindex von ca. 2.5, Praseodym-Titanoxid (Pr-Ti-Oxid), Lanthan-Titanoxid (La-Ti-Oxid), ZnS oder $CeO_2$. Bevorzugt werden jedoch HI-Schichten aus $TiO_2$, Pr-Ti-Oxid oder La-Ti-Oxid. Das Aufbringen der HI-Schichten kann beispielsweise mittels PVD-Verfahren oder durch Zersetzung organischer, die gewünschten Metalloxide enthaltenden Verbindungen geschehen (z.B. durch CVD-Verfahren).

Beispiel:

Als Aluminiumoberfläche wird eine walzblanke Aluminiumoberfläche einer Reinheit von 99.9 Gew.-% Al verwendet, die nachfolgender Vorbehandlung unterzogen wird:

    1.) Abkochentfetten während 5 Minuten
    2.) Spülen
    3.) Neutralisieren in $HNO_3$ (Konzentration $HNO_3$ : $H_2O$= 1 : 1)
    4.) Spülen
    5.) Spülen in $H_2O$ und $H_2O_{deion}$.
    6.) Tauchbad in Äthanol
    7.) Trocknen mit Heissluft

Nach der Vorbehandlung wird die Aluminiumoberfläche gemäss nachfolgender Prozedur geglänzt:

    1.) Tauchbad in kaltem Elektrolyten
    2.) Elektrolyse in $H_3PO_4$/$H_2SO_4$ (Dichte 1.755) während 60 s bei 16 V
    3.) Spülen in $H_2O$ bei 60 °C
    4.) Entfernen des Elektrolytbelages in NaOH (100 g/l) bei 50 °C während 3 s
    5.) Spülen
    6.) Neutralisieren in $HNO_3$ (Konzentration $HNO_3$ : $H_2O$= 1 : 1)
    7.) Spülen in $H_2O$ und $H_2O_{deion}$.
    8.) Tauchbad in Äthanol
    9.) Trocknen mit Heissluft

Die geglänzte Aluminiumoberfläche wird nun bei Raumtemperatur in Zitronensäure einer Konzentration von 1 g/l anodisiert, wobei die angelegte Elektrolysespannung anfänglich 20 V beträgt und danach kontinuierlich mit 20 V/ min erhöht wird. Nach Erhöhung der Spannung um 10 V wird jeweils die gerichtete Reflexion in einem Winkel zur Oberflächennormalen von 20° der mit der Sperrschicht versehenen Aluminiumoberfläche nach DIN 67530, d.h. gegen Al-Spiegel gemessen, wobei die Reflexion des Al-Spiegels 100 % beträgt. Der während der Elektrolyse gemessene Reststrom beträgt im gesamten Spannungsbereich von 20 V bis 370 V weniger als 15 mA/$dm^2$.

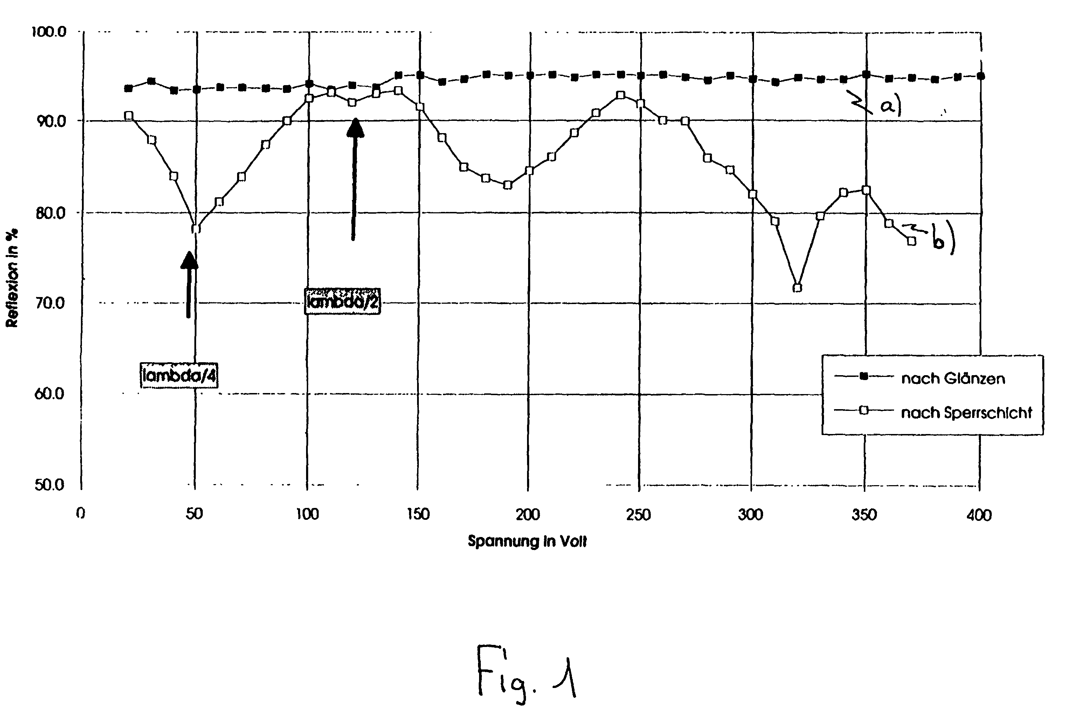

Figur 1 zeigt den Vergleich der gerichteten Reflexion einer geglänzten Aluminiumoberfläche einer Reinheit von 99.9 Gew.-% Al mit einer geglänzten und mit einer 150 nm dicken Sperrschicht versehenen Aluminiumoberfläche gleicher Reinheit. Auf der Ordinate der Figur 1 sind die gemessenen Reflexionsmesswerte nach DIN 67530 und auf der Abszisse die angelegte Elektrolysespannung in Volt aufgetragen. Die Kurve a) zeigt die gemessenen Reflexionswerte der geglänzten Aluminiumoberfläche, während Kurve b) die Reflexions-Messwerte der mit der Sperrschicht versehenen geglänzten Aluminiumoberfläche zeigt. Die Reflexions-Messwerte sind jeweils in % zu einem Standardspiegel, d.h. Al-bedampfte Glasplatte mit $SiO_2$-Schutzschicht, eingetragen. In Figur 1 sind zudem die Reflexions-Messwerte für Sperrschicht-Schichtdicken, bei denen die optische Schichtdicke im wesentlichen $\lambda$/4 (lambda/4) bzw. im wesentlichen $\lambda$/2 (lambda/2) beträgt, eingezeichnet.

**Patentansprüche**

**1.** Verfahren zur Herstellung eines Reflektors aus Aluminium oder einer Aluminiumlegierung für lichttechnische Zwecke, enthaltend eine reflektierende Oberfläche aus Aluminium und eine Schutzschicht vorgegebener Schichtdicke d aus anodisch erzeugtem Aluminiumoxid, bei welchem Verfahren die Oberfläche eines/einer durch ein Walz-, Extrusions-, Schmiede- oder Fliesspressverfahren hergestellten Stückgutes, Bandes, Bleches oder Folie aus Aluminium einer Reinheit von 99.5 bis 99.98 Gew.-% Al oder einer Aluminiumlegierung gegebenenfalls strukturiert, dann mechanisch, elektrolytisch oder chemisch geglänzt und anschliessend in einem Elektrolyten elektrolytisch oxidiert wird,
**dadurch gekennzeichnet, dass**

die elektrolytische Oxidation in einem Aluminiumoxid nicht rücklösenden Elektrolyten bei einer konstanten Elektrolyse-Gleichspannung U in Volt, die nach Massgabe

$$d(nm)/1.4 \leq U(V) \leq d(nm)/1.2$$

gewählt wird, durchgeführt und die Schichtdicke d zwischen 60 und 490 nm gewählt wird, wobei eine die Oberfläche aus Aluminium schützende, transparente Sperrschicht mit einer Porosität von weniger als 1 % und einer Dielektrizitätskonstanten $\varepsilon$ bei 20 °C von 6 bis 10.5 entsteht und die Schichtdicke d der Sperrschicht über der ganzen Oberfläche aus Aluminium um nicht mehr als $\pm$ 5 % variiert.

2.  Verfahren nach Anspruch 1, **dadurch gekennzeichnet, dass** als nicht rücklösender Elektrolyt Lösungen enthaltend organische oder anorganische Säuren verwendet werden und die Lösungen einen pH-Wert von 2 bis 7 aufweisen.

3.  Verfahren nach Anspruch 2, **dadurch gekennzeichnet, dass** als Elektrolyt eine mit Wasser verdünnte Borsäure, Adipinsäure, Zitronensäure oder Weinsäure, oder Gemische davon, verwendet werden.

4.  Verfahren nach Anspruch 2, **dadurch gekennzeichnet, dass** der Elektrolyt eine Lösung von Ammonium- oder Natriumsalzen von organischen oder anorganischen Säuren oder eine Lösung, enthaltend Ammonium- oder Natriumsalze von organischen oder anorganischen Säuren und die entsprechenden organischen oder anorganischen Säuren, darstellt und die Ammonium- oder Natriumsalz-Konzentration von 2 bis 15 g/l beträgt.

5.  Verfahren nach einem der Ansprüche 1 bis 4, **dadurch gekennzeichnet, dass** die elektrolytische Oxidation der Aluminiumoberfläche als kontinuierlicher Prozess in einer Durchlaufanlage, vorzugsweise in einem anodischen Bandanodisierverfahren, durchgeführt wird.

6.  Verfahren nach einem der Ansprüche 1 bis 5, wobei die Sperrschicht eine Schichtdicke $d$ aufweist, die der Massgabe

$$d{\cdot}n = k{\cdot}\lambda/2 \pm 20 \text{ nm}$$

entspricht, die Sperrschicht weniger als 3 % der eingestrahlten Lichtenergie absorbiert, k eine natürliche Zahl, n der Brechungsindex der Sperrschicht und $\lambda$ die mittlere Wellenlänge des auf die Reflektoroberfläche eingestrahlten Lichtes bezeichnet.

7.  Verfahren nach einem der Ansprüche 1 bis 5, wobei die Sperrschicht eine Schichtdicke $d$ aufweist, die der Massgabe

$$[k{\cdot}\lambda/2 + 20 \text{ nm}] < d{\cdot}n < [(k+1){\cdot}\lambda/2 - 20 \text{ nm}]$$

entspricht, $k$ ein natürliche Zahl, $n$ der Brechungsindex der Sperrschicht und die mittlere Wellenlänge des auf die Reflektoroberfläche eingestrahlten Lichtes bezeichnet.

8.  Verfahren nach einem der Ansprüche 1 bis 5, wobei die Sperrschicht eine Schichtdicke d aufweist, die der Massgabe

$$d{\cdot}n = l{\cdot}\lambda/4 \pm 20 \text{ nm}$$

entspricht, $l$ eine ungerade natürliche Zahl, $n$ der Brechungsindex der Sperrschicht und $\lambda$ die mittlere Wellenlänge des auf die Reflektoroberfläche eingestrahlten Lichtes bezeichnet.

9.  Verfahren nach einem der Ansprüche 1 bis 5, wobei die Sperrschicht eine Schichtdicke $d$ aufweist, die der Massgabe

$$[k \cdot \lambda/2 + 20 \text{ nm}] < d \cdot n < [(k+1) \cdot \lambda/2 - 20 \text{ nm}]$$

entspricht, $k$ ein natürliche Zahl, $n$ der Brechungsindex der Sperrschicht und $\lambda$ die mittlere Wellenlänge des auf die Reflektorobexfläche eingestrahlten Lichtes bezeichnet.

**Claims**

1. Process for the production of a reflector of aluminium or an aluminium alloy for lighting purposes, comprising a reflecting surface of aluminium and a protective layer of anodised aluminium oxide having a predetermined thickness d, in which process the surface of piece goods, a strip, sheet or foil of aluminium with a purity of 99.5 to 99.98 % by weight Al or an aluminium alloy produced by rolling, extrusion, forging or flow pressing is possibly structured, then mechanically, electrolytically or chemically brightened and then electrolytically oxidised in an electrolyte, **characterised in that** the electrolytic oxidation is carried out in an electrolyte not redissolving aluminium oxide at a constant electrolysis voltage U in volts selected according to

$$d(\text{nm})/1.4 \leq U(\text{V}) \leq d(\text{nm})/1.2$$

and the layer thickness d is selected to be between 60 and 490 nm, a transparent barrier layer with a porosity of less than 1 % and a dielectric constant $\varepsilon$ of 6 to 10.5 at 20°C protecting the aluminium surface being produced and the thickness d of the barrier layer varying by no more than $\pm$ 5 % over the entire aluminium surface.

2. Process according to claim 1, **characterised in that** solutions containing organic or inorganic acids are used as the non-redissolving electrolyte and the solutions have a pH value of 2 to 7.

3. Process according to claim 2, **characterised in that** boric acid, adipic acid, citric acid or tartaric acid diluted with water, or mixtures thereof, are used as the electrolyte.

4. Process according to claim 2, **characterised in that** the electrolyte is a solution of ammonium salts or sodium salts of organic or inorganic acids or a solution containing ammonium salts or sodium salts of organic or inorganic acids and the corresponding organic or inorganic acids and the ammonium salt or sodium salt concentration is 2 to 15 g/l.

5. Process according to one of claims 1 to 4, **characterised in that** the electrolytic oxidation of the aluminium surface is carried out as a continuous process in a continuously operating installation, preferably by strip anodising.

6. Process according to one of claims 1 to 5, in which the barrier layer has a thickness d corresponding to

$$d \cdot n = k \cdot \lambda/2 \pm 20 \text{ nm,}$$

the barrier layer absorbs less than 3 % of the incident light energy, k is a natural number, n is the refractive index of the barrier layer and $\lambda$ is the mean wavelength of the light incident on the reflector surface.

7. Process according to one of claims 1 to 5, in which the barrier layer has a thickness d corresponding to

$$[k \cdot \lambda/2 + 20 \text{ nm}] < d \cdot n < [(k+1) \cdot \lambda/2 - 20 \text{ nm}],$$

$k$ is a natural number, $n$ is the refractive index of the barrier layer and $\lambda$ is the mean wavelength of the light incident on the reflector surface.

8. Process according to one of claims 1 to 5, in which the barrier layer has a thickness d corresponding to

$$d \cdot n = l \cdot \lambda/4 \pm 20 \text{ nm,}$$

*l* is an odd natural number, *n* is the refractive index of the barrier layer and λ is the mean wavelength of the light incident on the reflector surface.

9. Process according to one of claims 1 to 5, in which the barrier layer has a thickness *d* corresponding to

$$[k \cdot \lambda/2 + 20 \text{ nm}] < d \cdot n < [(k+1) \cdot \lambda/2 - 20 \text{ nm}],$$

*k* is a natural number, *n* is the refractive index of the barrier layer and λ is the mean wavelength of the light incident on the reflector surface.

**Revendications**

1. Procédé de préparation d'un réflecteur en aluminium ou en un alliage d'aluminium pour des objets de technique lumineuse, contenant une surface réfléchissante en aluminium et une couche de protection d'épaisseur de couche donnée d en oxyde d'aluminium produit de manière anodique, procédé pour lequel la surface d'un élément, une bande, une tôle ou une feuille préparé par un procédé de calandrage, d'extrusion, de forgeage ou de formage par fluage, en aluminium ayant une pureté de 99,5 à 99,98% en poids de A1 ou en un alliage d'aluminium, est le cas échéant structurée, puis polie de manière mécanique, électrolytique ou chimique et finalement, oxydée de manière électrolytique dans un électrolyte, **caractérisé en ce que** l'oxydation électrolytique est réalisée dans un électrolyte ne redissolvant pas l'oxyde d'aluminium, à une tension constante d'électrolyse U en Volt, qui est choisie selon l'inégalité :

$$d \text{ (nm)}/1,4 \leq U \text{ (V)} \leq d \text{ (nm)}/1,2$$

et **en ce que** l'épaisseur de couche d est choisie dans l'intervalle allant de 60 à 490 nm, où on forme une couche barrière transparente, protégeant la surface en aluminium, avec une porosité de moins de 1% et avec une constante diélectrique ε à 20°C allant de 6 à 10,5 et où l'épaisseur de couche d de la couche barrière varie sur toute la surface en aluminium, de pas plus de ± 5%.

2. Procédé selon la revendication 1, **caractérisé en ce que** l'on utilise comme électrolyte non redissolvant, des solutions contenant des acides organiques ou inorganique et **en ce que** les solutions présentent un pH allant de 2 à 7.

3. Procédé selon la revendication 2, **caractérisé en ce que** l'on utilise comme électrolyte, l'acide borique, l'acide adipique, l'acide citrique ou l'acide tartrique dilué avec de l'eau, ou leurs mélanges.

4. Procédé selon la revendication 2, **caractérisé en ce que** l'électrolyte est une solution de sels d'ammonium ou de sodium d'acides organiques ou inorganiques ou une solution, contenant des sels d'ammonium ou de sodium d'acides organiques ou inorganiques et les acides organiques ou inorganiques correspondants et **en ce que** la concentration en sel d'ammonium ou de sodium se situe dans l'intervalle allant de 2 à 15 g/litre.

5. Procédé selon l'une quelconque des revendications 1 à 4, **caractérisé en ce que** l'oxydation électrolytique de la surface en aluminium est réalisée en tant que processus continu dans une installation à passage, de préférence dans un procédé d'anodisation de bande.

6. Procédé selon l'une quelconque des revendications 1 à 5, où la couche barrière présente une épaisseur de couche d, qui correspond à l'équation :

$$d \cdot n = k \cdot \lambda/2 \pm 20 \text{ nm},$$

où la couche barrière absorbe moins de 3% de l'énergie lumineuse incidente, k est un nombre naturel, n est l'indice de réfraction de la couche barrière et λ est la longueur d'onde moyenne de la lumière incidente sur la surface du réflecteur.

7. Procédé selon l'une quelconque des revendications 1 à 5, où la couche barrière présente une épaisseur de couche d, qui correspond à l'équation :

$$k \cdot \lambda/2 \pm 20 \text{ nm} < d \cdot n < (k+1) \cdot \lambda/2 \pm 20 \text{ nm}$$

où k est un nombre naturel, n est l'indice de réfraction de la couche barrière et $\lambda$ est la longueur d'onde moyenne de la lumière incidente sur la surface du réflecteur.

8. Procédé selon l'une quelconque des revendications 1 à 5, où la couche barrière présente une épaisseur de couche d, qui correspond à l'équation :

$$d.n = 1 \cdot \lambda/4 \pm 20 \text{ nm}$$

où 1 est un nombre naturel impair, n est l'indice de réfraction de la couche barrière et $\lambda$ est la longueur d'onde moyenne de la lumière incidente sur la surface du réflecteur.

9. Procédé selon l'une quelconque des revendications 1 à 5, où la couche barrière présente une épaisseur de couche d, qui correspond à l'équation :

$$[k \cdot \lambda/2 \pm 20 \text{ nm}] < d \cdot n < [(k+1) \cdot \lambda/2 \pm 20 \text{ nm}]$$

où k est un nombre naturel, n est l'indice de réfraction de la couche barrière et $\lambda$ est la longueur d'onde moyenne de la lumière incidente sur la surface du réflecteur.

Fig. 1